# FASCICULE DE BREVET EUROPEEN

(11) **EP 4 489 575 B1**
(45) Date de publication et mention de la délivrance du brevet: **02.09.2026**
(21) Numéro de dépôt: 23709227.5
(22) Date de dépôt: 08.03.2023
(51) Int. Cl.: A01N 65/08, A01P 3/00

(54) **COMPOSITION PHYTOSANITAIRE ET SON UTILISATION**
PFLANZENSCHUTZZUSAMMENSETZUNG UND DEREN VERWENDUNG
PHYTOSANITARY COMPOSITION AND ITS USE

(30) Priorité: 09.03.2022 FR 2202044
(43) Date de publication de la demande: 15.01.2025
(73) Titulaire: De Sangosse, 47480 Pont du Casse (FR)
(72) Inventeur: SUTRE, Bertrand, 33510 ANDERNOS LES BAINS (FR)
(74) Mandataire: Ipsilon
(86) Numéro de dépôt international: PCT/EP2023/055938
(87) Numéro de publication internationale: WO 2023/170178

(56) Documents cités:
- WO-A1-03/043971
- WO-A2-2006/128677
- WO-A2-2011/007104
- FR-B1- 2 867 026
- ROBLIN GABRIEL ET AL: "Towards a preventive and/or curative treatment of esca in grapevine trunk disease: General basis in the elaboration of treatments to control plant pathogen attacks", CROP PROTECTION, ELSEVIER SCIENCE, GB, vol. 116, 30 October 2018 (2018-10-30), pages 156 - 169, XP085542024, ISSN: 0261-2194, DOI: 10.1016/J.CROPRO.2018.10.016

## Description

### Domaine technique

La présente invention concerne le domaine des compositions phytosanitaires destinées à lutter contre les maladies cryptogamiques de la plante. En particulier, la présente invention concerne une composition phytosanitaire liquide, son procédé de préparation, ainsi que sa mise en œuvre.

### Technique antérieure

Les plantes cultivées sont sujettes à de nombreuses maladies dues notamment à des champignons phytopathogènes responsables de plusieurs maladies, telles que le mildiou et l'oïdium de la vigne.

Les moyens de lutte contre ces parasites font en général appel à différents types de compositions phytosanitaires pouvant comporter notamment des phosphites et/ou des dérivés du cuivre ou du métirame de zinc.

Des tests sur l'utilisation du métirame de zinc, en tant que substance active dans des compositions phytosanitaires, ont révélé que cette substance pouvait provoquer une allergie cutanée, pouvait être toxique pour les organismes aquatiques et pouvait être une substance cancérogène. Dans la même catégorie de fongicides que le métirame de zinc, l'utilisation du mancozèbe a été interdite en 2021. Ces études laissent penser que l'utilisation du métirame de zinc dans des compositions phytosanitaire sera probablement amenée à être interdite dans les années à venir.

Le cuivre et ses dérivés (sulfate ou hydroxyde de cuivre) sont considérés comme des produits naturels utilisés dans l'agriculture biologique et en agriculture conventionnelle. Néanmoins, des rapports sur l'évaluation de compositions phytosanitaires comprenant du cuivre ont mis en évidence les risques sur la santé et l'environnement liés à l'utilisation de ces compositions. En effet, les composés du cuivre ne sont pas métabolisés par la plante et sont ainsi rapidement lessivés. Le cuivre se retrouve ainsi à haute dose dans l'environnement et ne permet pas une protection efficace de la plante. Les années où les plantes sont fortement affectées par l'oïdium ou le mildiou, des traitements répétés à forte dose sont nécessaires pour protéger ces plantes. Or, le cuivre, bien qu'il consiste en un oligoélément, n'est pas une substance biodégradable et s'accumule ainsi dans le sol.

Depuis 2015, les composés du cuivre sont inscrits sur la liste des « candidats à la substitution », ce qui signifie que ces agents sont particulièrement préoccupants pour la santé publique ou l'environnement. La demande de solutions alternatives afin de réduire ou supprimer le recours à des composés du cuivre dans les compositions phytosanitaire est en hausse.

Néanmoins, le retrait des composés du cuivre dans les compositions phytosanitaires priverait l'agriculture biologique de l'unique solution efficace reconnue à ce jour contre plusieurs maladies cryptogamiques telles que le mildiou. A ce jour, aucun traitement alternatif efficace n'a été mis au point en agriculture biologique pour remplacer l'utilisation des composés du cuivre pour combattre les maladies cryptogamiques.

Quant aux phosphites acides, ceux-ci sont plus particulièrement proposés dans des compositions fongicides pour la lutte contre les maladies cryptogamiques des plantes.

Le document FR2917947 concerne une composition phytosanitaire comprenant du mancozèbe, au moins un dérivé terpénique et au moins un composé de cuivre. Cette composition à l'inconvénient de comporter une forte quantité de substances de synthèse controversées, voire interdites, qui s'accumulent dans l'environnement.

Le document FR2867026 concerne une composition phytosanitaire comprenant un composé actif phosphite et une huile essentielle végétale. Bien que cette composition soit efficace contre les maladies cryptogamiques de la plante, les huiles essentielles sont susceptibles d'être toxiques pour l'homme et l'environnement en plus de présenter une sélectivité relative sur certains types de végétaux. Les huiles essentielles utilisées en agriculture peuvent agresser l'entomofaune ainsi que provoquer un dérèglement biologique préjudiciable à la culture de certaines plantes.

Il ressort de ce qui précède que les compositions actuellement sur le marché, pour lutter contre les maladies cryptogamiques de la plante, contiennent en grande quantité des substances de synthèse controversées présentant des problèmes pour la santé et l'environnement. Par ailleurs, plusieurs de ces composés sont susceptibles d'être interdits dans les années à venir à l'instar du métirame de zinc.

Ainsi, il existe un besoin de mise à disposition de nouvelles compositions phytosanitaires ne comprenant pas de composés présentant des risques pour la santé et l'environnement.

Il existe un besoin de mise à disposition de nouvelles compositions phytosanitaires ne comprenant pas de composés susceptibles d'être interdits.

Il existe un besoin pour de nouvelles compositions phytosanitaires limitant l'utilisation des composés de synthèse.

Il existe également un besoin pour de nouvelles compositions phytosanitaires comportant de faibles risques pour la santé et l'environnement tout en étant efficace contre les maladies cryptogamiques.

Il existe un besoin pour de nouvelles compositions phytosanitaires qui ne laissent peu, voire pas, de résidus phosphites.

Il existe un besoin pour de nouvelles compositions phytosanitaires pour l'agriculture biologique.

Il existe un besoin pour de nouvelles compositions phytosanitaires qui n'altèrent pas la physiologie des plantes.

Il existe un besoin pour de nouvelles compositions phytosanitaires à faibles coûts de production.

Il existe un besoin de nouvelles solutions afin de réduire les doses de traitement des compositions phytosanitaires connues comprenant des composés controversés.

La présente description vise à proposer de nouvelles compositions phytosanitaires et des kits phytosanitaires satisfaisant tout ou partie de ces besoins.

### Exposé de la présente description

La présente description concerne une composition phytosanitaire liquide comprenant, à titre d'agents actifs, au moins : un composé phosphite fongicide, et un extrait végétal d'écorce d'osier, en particulier un extrait végétal hydrophile d'écorce d'osier.

Comme détaillé dans les exemples ci-après, il a été observé que le phosphonate de monopotassium associé à un extrait végétal d'écorce d'osier, en particulier sous la forme d'une tisane d'écorce d'osier présentaient un effet synergique permettant une protection plus efficace des plantes, notamment de la vigne, contre les maladies cryptogamiques, tel que le mildiou.

Cette association de phosphonate de potassium et d'un extrait végétal hydrophile d'écorce d'osier présente également l'avantage de ne pas, ou peu, altérer la physiologie de la plante.

Les compositions et kits phytosanitaires selon la présente description permettent notamment une complémentarité des efficacités entre le composé phosphite fongicide d'une part, et la tisane d'écorce d'osier d'autre part. En effet, il a été démontré que les phosphites, en particulier le phosphonate de monopotassium, sont très efficaces pour lutter contre les maladies cryptogamiques sur les feuilles des plantes mais moins efficaces sur les fruits, comme les grappes de raisin. A l'inverse, il est connu que les extraits végétaux d'écorce d'osier, en particulier la tisane d'écorce d'osier, sont très efficaces pour lutter contre les maladies cryptogamiques sur les grappes de raisin mais peu efficaces sur les feuilles des plantes.

Ainsi, étant donné que l'extrait végétal d'écorce d'osier a peu d'effet préventif ou de traitement pour lutter contre les maladies cryptogamiques sur les feuilles des plantes, il ne pouvait être prévu ou envisagé que l'association d'un composé phosphite fongicide, en particulier le phosphonate de potassium, avec un extrait végétal d'écorce d'osier, en particulier une tisane d'écorce d'osier, permettrait d'améliorer l'effet du composé phosphite fongicide contre les maladies cryptogamiques sur les feuilles des plantes.

En particulier, il ne pouvait être attendu un effet synergique sur l'efficacité de protection des feuilles d'une plante contre les maladies cryptogamiques par l'utilisation d'une infusion d'écorce d'osier et d'un phosphonate de potassium.

Par ailleurs, la combinaison d'un composé phosphite fongicide avec de la tisane d'écorce d'osier présente l'avantage de réduire les doses par hectares de tisane d'écorce d'osier et ainsi éviter les éventuels désagrément de l'écorce d'osier sur les cultures.

L'ensemble des éléments apportés par la composition phytosanitaire de la présente description sont métabolisables par les plantes afin de répondre à leurs besoins trophiques de croissance et de reproduction. Ainsi, ladite composition phytosanitaire évite le risque d'accumulation dans l'environnement de composés toxiques et présente peu de risque de générer des effluents toxiques.

Outre les effets sur les maladies cryptogamiques, la composition phytosanitaire de la présente description possède de nombreux autres avantages. La composition phytosanitaire de la présente description laisse peu, voire aucun, résidu de phosphite sur les fruits des plantes.

La composition phytosanitaire de la présente description n'a pas d'effet délétère, voire améliore, la qualité des vins obtenus par la fermentation des raisins des vignes.

La composition phytosanitaire de la présente description permet une protection des pousses des plantes néoformées.

La composition phytosanitaire de la présente description permet d'éviter le risque de développement de populations de souches résistantes à ladite composition phytosanitaire.

La composition phytosanitaire de la présente description possède un faible taux de toxicité sur l'environnement et est entièrement métabolisable par les plantes traitées.

### Résumé de la présente description

La présente description concerne une composition phytosanitaire liquide comprenant, à titre d'agents actifs, au moins :
- un composé phosphite fongicide, et
- un extrait végétal d'écorce d'osier.

Selon certains modes de réalisation, le composé phosphite fongicide peut être choisi parmi le phosphite de sodium, le phosphite de potassium, le phosphite d'ammonium, le phosphite de triéthylamine, le phosphite de diéthanolamine, et leurs mélanges, en particulier le phosphite de monopotassium.

Selon certains modes de réalisation, le composé phosphite fongicide peut être présent en une teneur d'environ 10 % à environ 20 % par rapport au poids total de la composition phytosanitaire.

Selon certains modes de réalisation particulier, le composé phosphite fongicide peut être présent en une teneur d'environ 15 % en poids par rapport au poids total de la composition phytosanitaire.

Selon certains modes de réalisation, l'extrait végétal d'écorce d'osier peut être un extrait végétal hydrophile d'écorce d'osier.

Selon certains modes de réalisation, la présente description concerne une composition phytosanitaire liquide comprenant, à titre d'agents actifs, au moins : - un composé phosphite fongicide choisi parmi le phosphite de sodium, le phosphite de potassium, le phosphite d'ammonium, le phosphite de triéthylamine, le phosphite de diéthanolamine, et leurs mélanges, et
- un extrait végétal hydrophile d'écorce d'osier.

Selon certains modes de réalisation particulier, l'extrait végétal d'écorce d'osier peut être une tisane d'écorce d'osier.

En particulier, l'extrait végétal hydrophile d'écorce d'osier peut être une tisane d'écorce d'osier.

Selon certains modes de réalisation, la composition phytosanitaire peut comporter une teneur en écorce d'osier d'environ 0.5 % à environ 8 % en poids par rapport au poids total de la composition phytosanitaire.

Selon certains modes de réalisation particulier, la composition phytosanitaire peut comporter une teneur en écorce d'osier d'environ 4 % en poids par rapport au poids total de la composition phytosanitaire.

Selon certains modes de réalisation, la composition phytosanitaire peut avoir un pH inférieur à 6.5.

Selon certains modes de réalisation particulier, la composition phytosanitaire peut avoir un pH allant d'environ 4.0 à environ 6.5.

De préférence, la composition phytosanitaire peut avoir pH d'environ 5.

Selon un autre de ses aspects, la présente description concerne un kit phytosanitaire comprenant une première composition comprenant une composition phytosanitaire liquide selon la présente description, et une seconde composition comprenant une source de cuivre ou du métirame de zinc.

Selon un autre de ses aspects, la présente description concerne l'utilisation d'une composition phytosanitaire liquide selon la présente description ou d'un kit phytosanitaire selon la présente description, pour la prévention et/ou le traitement d'au moins une maladie cryptogamique d'une plante.

Selon certains modes de réalisation particulier, la maladie cryptogamique peut être choisie parmi le mildiou, l'oïdium, l'excoriose, le black-rot, le feu bactérien, la rouille jaune, la fusariose, la tavelure, l'anthracnose, la cloque du pêcher, une maladie causée par des bactéries du genre Xanthomonas ou une maladie causée par des bactéries de l'espèce Pseudomonas syringae.

De préférence, la maladie cryptogamique peut être le mildiou ou l'oïdium.

Selon un autre de ses aspects, la présente description concerne un procédé de préparation d'une composition phytosanitaire selon la présente description, comprenant au moins une étape de mélange d'au moins une composition comprenant un composé phosphite fongicide et d'au moins un extrait végétal d'écorce d'osier.

### Brève description des dessins

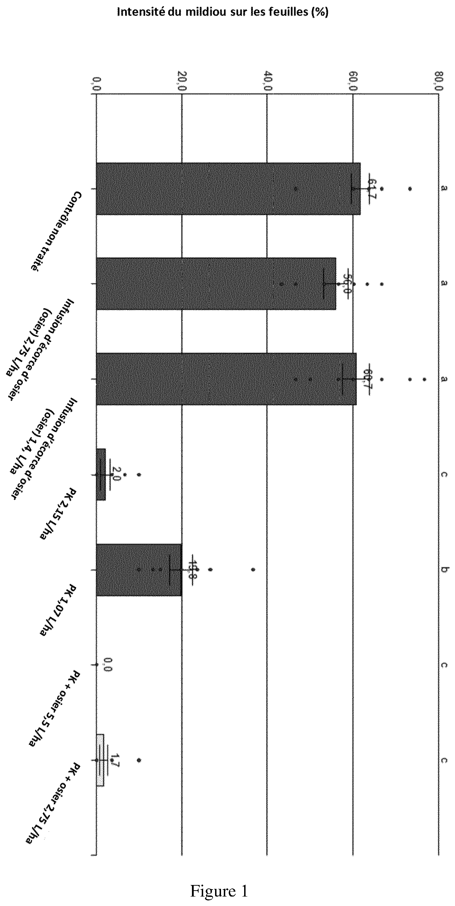

La figure 1 représente les résultats sur l'intensité d'attaque du mildiou sur des plants de vignes préalablement traités, ou non, avec différentes compositions phytosanitaires. Le traitement se fait sur des plants de vigne de 3 mois, à deux reprises à 4 jours et 1 jour avant l'infection par le pathogène responsable du mildiou. Ordonnée : L'intensité d'attaque du mildiou en pourcentage. Abscisse (de gauche à droite) : Plants non traités (contrôle) ; Plants traités avec une infusion d'écorce d'osier (2,75L/ha) ; Plants traités avec une infusion d'écorce d'osier (1,4L/ha) ; Plants traités avec une composition de phosphonate de potassium (2,15L/ha) ; Plants traités avec une composition de phosphonate de potassium (1,07L/ha) ; Plants traités avec une composition comprenant du phosphonate de potassium et une infusion d'écorce d'osier (5,5L/ha) ; Plants traités avec une composition comprenant du phosphonate de potassium et une infusion d'écorce d'osier (2,75L/ha).

### Description détaillée

### Définitions

Tel qu'utilisé dans cette description et les revendications, les formes singulières « **un », « une », « le** » et « **la** » incluent la pluralité, sauf indication contraire et explicite du contexte.

La description des différents modes de réalisation de la présente description comprend les modes de réalisation incluant « **comprenant** », « **ayant** », « **consistant en** » et « **consistant essentiellement en** ». Les mots « avoir » et « comprendre », ou des variantes telles que « a », « ont », « comprend » ou « comprenant » doivent être compris comme impliquant l'inclusion du ou des éléments indiqués (comme un élément d'une composition ou une étape de méthode) mais pas l'exclusion d'autres éléments. Le terme « consistant en » implique l'inclusion du ou des éléments indiqués, à l'exclusion de tout élément supplémentaire. Selon le contexte, le terme « comprendre » peut également indiquer strictement les caractéristiques indiquées, les nombres entiers, les étapes ou les composants indiqués et, par conséquent, dans ce cas, il peut être remplacé par « consister en ».

Tel qu'utilisé dans la présente description le terme « **composition** » fait référence à une composition phytosanitaire qu'elle soit sous une forme concentrée, dont la dilution dans l'eau est requise avant son utilisation, ou prête à l'emploi telle quelle.

Par « **composition phytosanitaire** », on entend selon la présente description une composition contenant une ou plusieurs substances actives visant à lutter contre les maladies cryptogamiques de la plante et/ou à exercer une action protectrice et stimulante sur les processus vitaux et physiologiques des végétaux. En particulier, la présente description vise les utilisations pour lutter contre les maladies cryptogamiques de la plante. Une composition phytosanitaire telle que décrite ici comprend au moins deux substances actives, exerçant un effet synergique sur au moins une des activités telles que définies précédemment. En particulier, une composition phytosanitaire telle que décrite comprend une composition d'origine naturelle, en particulier un extrait végétal hydrophile d'écorce d'osier. Par « composition d'origine naturelle », on entend que ses constituants, c'est-à-dire au moins les substances actives, sont d'origine naturelle, c'est à dire non obtenus par synthèse chimique.

Le terme « **environ** » tel qu'utilisé ici au regard d'une valeur numérique se réfère à la plage d'erreur habituelle pour la valeur considérée, telle qu'elle est habituellement identifiée par l'homme du métier dans le domaine technique considéré. La mention du terme « environ » au regard d'une valeur ou d'un paramètre spécifique inclut et décrit en tant que tel cette valeur ou ce paramètre. Le terme « environ » fait référence à ± 10 % d'une valeur donnée. Illustrativement, environ 1 comprend toutes les valeurs comprises entre 0,9 et 1,1. Cependant, chaque fois que la valeur en question se réfère à un objet indivisible qui perdrait son identité une fois subdivisé, alors « environ » fait référence à ± 1 de l'objet indivisible.

Par « **plante** » au sens de la présente description, on entend un organisme végétal comportant une tige, des racines et des feuilles. La plante peut en outre comporter au moins une partie comestible. On entend par partie comestible, toute partie de la plante susceptible d'être consommée par un être vivant, comme par exemple un fruit comme le raisin ou la pomme, les céréales, comme le maïs ou le riz, mais aussi un légume, y compris des feuilles comme la salade, des graines comme les pois, des bulbes comme l'oignon, des tubercules ou racines comme la pomme de terre, des germes comme le soja ou des tiges ou pousses comme les asperges. Plus particulièrement, une « plante », au sens de la présente description, comprend une plante de culture destinée à l'alimentation animale ou humaine. De préférence, la plante peut être une plante vasculaire, c'est-à-dire une plante appartenant aux trachéophytes. Les plantes vasculaires englobent les plantes ligneuses et les plantes herbacées. Dans certains modes de réalisation, la plante peut être une plante ligneuse. A titre d'exemple de plantes ligneuses, on peut citer les arbres fruitiers tels que le bananier, l'abricotier, le manguier, le prunier, le pécher, le pommier, le poirier, le cerisier, le cognassier, le noyer, le figuier, et les citrus, les arbres forestiers, les arbres et arbustes ornementaux ou horticoles comme les rosiers, le coton, le café et les vignes. Dans d'autres modes de réalisation, la plante peut être une plante herbacée. A titre d'exemple de plantes herbacées, on peut citer les plantes de la famille des solanacées comme la tomate et la pomme de terre, les plantes de la famille des apiacées comme la carotte ou le panais, les crucifères comme le colza, les graminées comme la canne à sucre, et les céréales comme le maïs, le riz, le blé, les mils, l'orge, l'avoine, et le seigle. Selon certains modes de réalisation préférés, une plante mise en œuvre dans la présente description peut être la vigne.

Le terme « **vigne** » désigne la vigne domestique, c'est-à-dire des plantes ligneuses de la famille des Vitacae du genre Vitis et plus particulièrement les espèces Vitis vinifera, Vitis berlandieri, Vitis labrusca, Vitis riparia, Vitis rupestris, Vitis amurensis, Vitis coignetiae et les espèces hybrides obtenues par le croisement entre au moins deux de ces espèces. La vigne englobe de nombreux cépages tels que le cabernet, le cabernet sauvignon, le merlot, le pinot, le sauvignon, le grenache, le gamay, l'ugni blanc, le chardonnay ou encore le sauvignon blanc.

Par « **extrait végétal d'écorce d'osier** » au sens de la présente description, on entend tout composé obtenu à partir d'écorce d'osier par tout procédé adapté. Un extrait végétal d'écorce d'osier selon la présente description est un extrait végétal hydrophile d'écorce d'osier. En d'autres termes, les composés extraits de l'écorce d'osier sont hydrosolubles. Ainsi, les huiles essentielles ou les essences végétales sont exclues des modes de réalisation de la présente description. On peut en particulier citer les extraits aqueux (obtenus à l'aide d'un solvant aqueux), ou alcooliques (obtenus à l'aide d'un solvant alcoolique), par exemple les solvants organiques. Par solvant aqueux on entend tout solvant constitué totalement ou pour part d'eau. On peut citer ainsi l'eau elle-même, les solvants hydroalcooliques en toute proportion ou encore les solvants constitués d'eau et d'un composé comme la glycérine ou le propylène glycol en toute proportion. Parmi les solvants alcooliques on peut citer notamment l'éthanol. Les extraits végétaux d'écorce d'osier mis en œuvre dans la présente description peuvent être obtenus par tout procédé adapté sans distillation par de l'alcool, de l'eau liquide ou un mélange des deux. A titre illustratif, les extraits végétaux d'écorce d'osier mises en œuvre dans la présente description peuvent être obtenus par un procédé comprenant les étapes suivantes : d'infusion, séparation / pressage, filtration et conditionnement. En particulier, un extrait végétal d'écorce d'osier peut être une tisane d'écorce d'osier.

Le terme « **tisane** » au sens de la présente description, fait référence à un liquide à base d'eau dans lequel a été infusée une ou plusieurs substances végétales. Ainsi, une tisane d'écorce d'osier est un liquide à base d'eau dans lequel a été infusée de l'écorce d'osier, en particulier une écorce sèche entière ou fragmentée. Le terme « tisane » inclus une infusion, une décoction ou une macération. L'infusion est une technique consistant à mettre en contact de l'eau chaude et des plantes pour tisane. La durée d'infusion peut varier de 30 minutes à 120 minutes et le mélange est ensuite filtré. La décoction est une technique consistant à ajouter des plantes pour tisane dans de l'eau froide puis de chauffer le mélange d'eau et de plante pendant 30 minutes à 60 minutes, avant de filtrer le mélange. La macération consiste à maintenir en contact les plantes pour tisane avec de l'eau à température ambiante pendant une durée de 30 minutes à 4 heures. Selon certains modes de réalisation préférés, une tisane d'écorce d'osier convenant à la préparation d'une composition phytosanitaire selon la présente description, peut être obtenue par l'infusion, la décoction ou la macération d'écorce d'osier dans de l'eau dans un rapport en poids « écorce d'osier : eau » d'environ 1 :12,5. A titre illustratif, une tisane d'écorce d'osier convenant à la préparation d'une composition phytosanitaire selon la présente description, peut être obtenue par l'infusion, la décoction ou la macération d'environ 80 grammes (g) d'écorce d'osier dans 1 litre d'eau. Selon certains modes de réalisation, une tisane d'écorce d'osier peut être une infusion d'écorce d'osier.

Par « **quantité efficace** » on entend au sens de la présente description une quantité suffisante pour obtenir l'effet désiré, notamment pour permettre la diminution ou la disparition des maladies cryptogamiques de la plante, en particulier les champignons ou bactéries présents ou susceptibles d'apparaître sur les plantes à traiter. En particulier, une quantité efficace de la composition phytosanitaire de la présente description permet de lutter efficacement contre le mildiou et/ ou l'oïdium de la plante.

Par « **bouillie bordelaise** », on entend au sens de la présente demande un mélange de sulfate de cuivre et de lait de chaux.

Par « **métirame de zinc »** on entend un composé fongicide de nom chimique zinc ammoniate ethylenebis (dithiocarbamate) poly (ethylenethiuram disulfide) et de formule brute [C16H33N11S16Zn3]X. Le métirame de zinc peut être contenu dans une composition commerciale, notamment dans le produit Lutiram^{®} commercialisé par la Société BASF.

Par « **fosétyl-aluminium** » ou « **fosétyl-Al** » on entend un composé organométallique du groupe des phosphonates, de nom chimique éthyle hydrogène phosphonate d'aluminium, de formule C6H18AIO9P3.

Au sens de la présente description, « **significativement** », utilisé dans le contexte d'un changement, signifie que le changement observé est notable ou qu'il a une signification statistique.

Par « **phosphonate** » ou « **phosphite** » on entend un sel de l'acide phosphonique. Un phosphonate est caractérisé par le groupe RPO(OR')(OR"), dans lequel R, R' et R" représentent un atome d'hydrogène, un groupe alkyle ou un groupe aryle. Par exemple, pour réduire l'acidité de l'acide phosphonique on peut utiliser l'hydroxyde de potassium (KOH), ce qui génère le phosphonate de potassium (K2HPO3). Les phosphonates possèdent des propriétés fongicides.

Par « **phosphite de monopotassium** » ou « **phosphonate de** monopotassium » on entend un composé inorganique de formule KH2PO3.

Par « **phosphite de disodium** » ou « **phosphonate de disodium** » on entend un composé inorganique de formule Na2O3P+.

Le terme « **hydrosoluble** » signifie qu'une matière (soluté) peut être dissoute de façon homogène dans de l'eau (solvant) à température ambiante, par exemple à une température comprise entre 15°C et 25°C.

### Composition phytosanitaire

Selon l'un de ses aspects, la présente description a pour objet une composition phytosanitaire, en particulier une composition phytosanitaire liquide, comprenant, à titre d'agents actifs, au moins :
- un composé phosphite fongicide, et
- un extrait végétal d'écorce d'osier.

Selon certains modes de réalisation, la composition phytosanitaire selon la présente description peut être sous une forme liquide.

Selon certains modes de réalisation, une composition phytosanitaire telle que décrite ici est liquide et peut comprendre, à titre d'agents actifs, au moins :
- un composé phosphite fongicide choisi parmi le phosphite de sodium, le phosphite de potassium, le phosphite d'ammonium, le phosphite de triéthylamine, le phosphite de diéthanolamine, et leurs mélanges, et
- un extrait végétal hydrophile d'écorce d'osier.

Selon certains modes de réalisation les solutions, en particulier les concentrés solubles dans l'eau, les émulsions, les suspensions concentrées, les aérosols, les poudres mouillables ou poudres à pulvériser, les sachets hydrosolubles, les pâtes et les gels peuvent être citées comme des formes liquides convenant à la composition de la présente description.

Selon certains modes de réalisation, une composition phytosanitaire selon la présente description peut être sous une forme prête à l'emploi, c'est-à-dire qu'elle peut être utilisée telle quelle pour traiter les plantes, en particulier pour lutter contre les maladies cryptogamiques.

Selon certains autres modes de réalisation, une composition phytosanitaire selon la présente description peut être sous une forme concentrée, c'est-à-dire qu'elle doit être diluée dans de l'eau avant son utilisation pour traiter les plantes, en particulier pour lutter contre les maladies cryptogamiques.

Selon certains autres modes de réalisation une composition phytosanitaire sous une forme concentrée peut être prête à l'emploi sans dilution préalable à l'application.

Selon certains modes de réalisation, une composition phytosanitaire prête à l'emploi peut être préparée de manière extemporanée.

A titre illustratif, la composition phytosanitaire concentrée ainsi qu'une quantité d'eau peuvent être conditionnées séparément dans un même dispositif de pulvérisation comprenant deux contenants. Lors de l'activation du dispositif de pulvérisation, la composition et l'eau sont acheminées séparément jusqu'à la sortie du dispositif et se mélangent une fois pulvérisées à la sortie du dispositif. En d'autres termes, une composition phytosanitaire prête à l'emploi selon la présente description peut être préparée peu de temps avant son utilisation.

Selon certains modes de réalisation, une composition phytosanitaire selon la présente description possède un pH inférieur ou égal à 6.5.

Selon certains modes de réalisation de particulier, la composition phytosanitaire possède un pH allant de 4.0 à 6.5.

En d'autres termes, la composition phytosanitaire telle que décrite ici possède un pH d'environ 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6, 6.1, 6.2, 6.3, 6.4, ou 6.5.

Selon certains modes de réalisation préférés, la composition phytosanitaire telle que décrite ici possède un pH de 5.

Sans vouloir être lié par une quelconque théorie, un pH supérieur ou égal à 4.0 et inférieur ou égal à 6.5.0 permettrait une bonne stabilité de la composition phytosanitaire. En d'autres termes, un pH supérieur ou égal à 4.0 et inférieur ou égal à 6.5 rendrait la composition phytosanitaire limpide et éviterait une précipitation de la composition phytosanitaire. Une précipitation de la composition phytosanitaire la rendrait non utilisable pour lutter contre les maladies cryptogamiques de la plante, notamment la précipitation de la composition phytosanitaire endommagerait les plantes à traiter. Par ailleurs, en termes d'utilisation, une précipitation de la composition phytosanitaire impliquerait la formation d'agrégats solides qui sont susceptibles d'obturer, au moins partiellement, les buses de sortie des dispositifs pulvérisateurs.

En particulier, la stabilité de la composition serait améliorée si le pH était supérieur ou égal à 4.0 et inférieur ou égal à 5.0.

Selon certains modes de réalisation, la composition phytosanitaire de la présente description est une composition stérile.

Selon un autre de ses aspects, la présente description concerne également un procédé de préparation d'une composition phytosanitaire telle que décrite ici, comprenant au moins une étape de mélange d'au moins un composé phosphite fongicide et d'au moins un extrait végétal d'écorce d'osier.

Selon certains modes de réalisation particuliers, un procédé de préparation d'une composition phytosanitaire telle que décrite ici, comprend au moins une étape de mélange d'au moins un composé phosphite fongicide et d'au moins une quantité de tisane d'écorce d'osier.

Selon certains modes de réalisation préférés, un procédé de préparation d'une composition phytosanitaire telle que décrite ici, comprend au moins une étape de mélange d'au moins une quantité de phosphonate de potassium et d'au moins une quantité de tisane d'écorce d'osier.

Selon certains modes de réalisation, un procédé de préparation d'une composition phytosanitaire selon la présente description comprend au moins les étapes suivantes :
(a) mettre en contact, dans un même récipient, les ingrédients suivants : une composition comprenant un composé phosphite fongicide et un extrait végétal d'écorce d'osier, et
(b) mélanger les ingrédients, obtenant ainsi une composition phytosanitaire concentrée.

Selon certains modes de réalisation préférés, les ingrédients sont mis en contact dans le récipient dans un rapport en poids « composition comprenant un composé phosphite fongicide: extrait végétal d'écorce d'osier » d'environ 0.5:2 à 2:0.5.

Un rapport en poids « composition comprenant un composé phosphite fongicide: extrait végétal d'écorce d'osier » peut-être d'environ 0.8 :1 ou environ 1 :1 ou environ 1 :0.8.

Selon certains modes de réalisation, ledit procédé comprend une étape c) dans laquelle on ajoute un volume d'eau en une quantité appropriée pour obtenir une composition phytosanitaire prête à l'emploi.

Selon certains autres modes de réalisation, le procédé de préparation d'une composition phytosanitaire selon la présente description peut comprendre en outre une étape de vérification, et le cas échéant d'ajustement, du pH du mélange.

Les techniques permettant de vérifier le pH d'un mélange sont bien connues de l'homme du métier. A titre illustratif, il peut être utilisé un papier indicateur d'acide alcalin ou un pH-mètre.

A titre d'exemple, notamment si le pH est supérieur à 6.5, le pH du mélange peut être ajusté à la valeur de pH désirée par addition d'une quantité efficace de phosphonate de monopotassium à la composition phytosanitaire.

Également à titre d'exemple, notamment si le pH est inférieur à 4, le pH du mélange peut être ajusté à la valeur de pH désirée par addition d'une quantité efficace de tisane d'écorce d'osier à la composition phytosanitaire.

Selon certains modes de réalisation d'un procédé de préparation d'une composition phytosanitaire telle que décrite ici, toutes les étapes du procédé peuvent être réalisées à une température ambiante, par exemple à une température d'environ 20°C.

### Composé phosphite fongicide

La composition selon la présente description comprend, à titre d'agents actifs, au moins un composé phosphite fongicide.

Selon certains modes de réalisation, le composé phosphite fongicide peut être mis en œuvre sous la forme d'un sel, notamment sous la forme d'un phosphonate ou également appelé phosphite.

Selon certains modes de réalisation particuliers, le composé phosphite fongicide peut être mis en œuvre sous la forme d'un sel minéral ou d'un sel organique.

En particulier, un sel minéral peut être un métal alcalin comme par exemple le sodium, le lithium ou le potassium.

En particulier, un sel organique peut-être un composé comprenant un atome d'azote pouvant accepter un proton de l'acide phosphorique, comme les amines primaires, secondaires, tertiaires, aliphatiques, aromatiques, alicycliques, hétérocycliques ou autres dérivés contenant de l'azote, comme par exemple les imidazoles, les cyclohexylamines, les anilines et les morpholines, éventuellement substituées. Les composés aromatiques ou hétérocycliques contenant de l'azote peuvent être substitués, notamment avec jusqu'à trois groupements alkyles, chacun pouvant comprendre de 1 à 4 atomes de carbone.

Selon certains modes de réalisation, le composé phosphite fongicide sous la forme d'un sel est hydrosoluble. Illustrativement, un sel hydrosoluble peut être un seul minéral, comme par exemple le potassium, notamment le monopotassium ou le dipotassium, ou le sodium, notamment le disodium ou le monosodium.

Toutefois, selon certains autres modes de réalisation, le composé phosphite fongicide sous la forme d'un sel peut être peu, voire non, hydrosoluble. Les sels compris dans ce mode de réalisation comprennent les sels de métaux alcalino-terreux, par exemple de magnésium, calcium, baryum, strontium ou de métaux plus lourds, par exemple le cuivre, le fer, le cobalt, le manganèse, le zinc ou l'aluminium.

Les techniques permettant de déterminer la solubilité d'un sel dans l'eau sont bien connues de l'homme du métier.

Selon certains modes de réalisation, les composés phosphites fongicides utilisables selon la présente description peuvent être choisis parmi ; le phosphite de sodium, le phosphite de potassium, le phosphite d'ammonium, le phosphite de triéthylamine, le phosphite de diéthanolamine, et leurs mélanges.

Selon certains modes de réalisation particuliers, le composé phosphite fongicide mis en œuvre dans la composition phytosanitaire selon la présente description peut être plus particulièrement en tout ou partie le phosphite de sodium, notamment le phosphite de monosodium et/ou le phosphite de disodium.

Selon certains modes de réalisation particuliers, le composé phosphite fongicide mis en œuvre dans la composition phytosanitaire selon la présente description peut être plus particulièrement en tout ou partie le phosphite de potassium, notamment le phosphite de monopotassium et/ou le phosphite de dipotassium.

Selon certains modes de réalisation particuliers, le composé phosphite fongicide mis en œuvre dans la composition phytosanitaire selon la présente description peut être le phosphite de monosodium, le phosphite de disodium, le phosphite de monopotassium, le phosphite de dipotassium et/ou leurs mélanges.

Selon certains modes de réalisation préférés, le composé phosphite fongicide mis en œuvre dans la composition phytosanitaire selon la présente description peut être en tout ou partie le phosphite de monopotassium.

Généralement, un composé phosphite fongicide possède un pH d'environ 4.5 à environ 6.5.

Selon certains modes de réalisation préférés, les composés phosphites fongicides peuvent être accessibles sous la forme de compositions commerciales.

Parmi ces compositions commerciales comprenant un composé phosphite fongicide, il peut être cité, à titre illustratif, la composition PK2 de la société Proval, la composition LBG-01F34 VIGNE^{®} de la société De Sangosse, la composition Redeli^{®} de la société Syngenta, le phosphonate de monopotassium de la société Altichem ou la composition Chaolin^{®} de la société BAYER.

Selon certains autres modes de réalisation, les composés phosphites fongicides peuvent être des composés non-commerciaux qui peuvent généralement être aisément préparés. Les procédés de préparation de composés phosphites fongicides sont bien connus de l'homme du métier, notamment à partir d'acide phosphorique ou de phosphite de disodium, comme décrit par exemple dans US 4 075 324.

Selon certains modes de réalisation, dans le cas d'une composition phytosanitaire concentrée, nécessitant d'être diluée préalablement à son utilisation, le composé phosphite fongicide peut être présent en une teneur pouvant aller d'environ 10 % à environ 20 % en poids de composé phosphite fongicide par rapport au poids total de la composition phytosanitaire.

Selon certains modes de réalisation, dans le cas d'une composition phytosanitaire concentrée, le composé phosphite fongicide peut être présent en une teneur pouvant aller d'environ 12 % à environ 17 % en poids de composé phosphite fongicide par rapport au poids total de la composition phytosanitaire.

En particulier, dans une composition phytosanitaire concentrée, le composé phosphite fongicide peut être présent en une teneur d'environ 13%, 14%, 15% ou 16% en poids de composé phosphite fongicide par rapport au poids total de la composition phytosanitaire.

Selon certains modes préférés de réalisation, le composé phosphite fongicide peut être présent en une teneur d'environ 15 % en poids de composé phosphite fongicide, en particulier de phosphonate de potassium, par rapport au poids total de la composition phytosanitaire concentrée.

La teneur en composé phosphite fongicide peut varier notamment selon la virulence de la maladie cryptogamique touchant les plantes, c'est-à-dire la virulence des champignons ou des bactéries sur les feuilles et grappes de la plante, et/ou les conditions climatiques.

### Extrait végétal d'écorce d'osier

La composition selon la présente description comprend, à titre d'agents actifs, au moins un extrait végétal d'écorce d'osier.

Selon certains modes de réalisation, l'extrait végétal d'écorce d'osier de la présente description est un extrait végétal hydrophile d'écorce d'osier.

Selon certains modes de réalisation, l'extrait végétal d'écorce d'osier de la présente description n'est pas une huile essentielle.

Selon certains modes de réalisation préférés, l'extrait végétal d'écorce d'osier de la présente description peut être une tisane d'écorce d'osier.

Généralement, l'extrait végétal d'écorce d'osier possède un pH d'environ 5 à 5.5.

Selon certains modes de réalisation, l'extrait végétal d'écorce d'osier mis en œuvre dans la présente description peut être obtenu par tout procédé adapté, sans distillation par de l'alcool, utilisant de l'eau liquide, par exemple par un procédé comprenant des étapes suivantes : d'infusion, de refroidissement, et de conditionnement. Selon certains modes de réalisation, l'extrait végétal d'écorce d'osier mis en œuvre dans la présente description peut être obtenu par un procédé d'extraction de composés d'écorce d'osier par infusion.

Une tisane d'écorce d'osier peut être une infusion d'écorce d'osier.

On entend par « obtenu par un procédé d'extraction de composés d'écorce d'osier par infusion », un procédé d'extraction comprenant au moins les étapes suivantes :
(a) d'infusion d'une quantité d'écorce d'osier dans l'eau pendant environ 30 minutes à environ 120 minutes, obtenant ainsi une tisane d'écorce d'osier,
(d) filtrer la tisane d'écorce d'osier obtenue à l'étape (a),
(e) conditionner la tisane d'écorce d'osier filtrée dans un récipient de stockage.

L'écorce d'osier peut-être une écorce entière et/ou des fragments d'écorce.

L'écorce d'osier peut-être sec.

Selon certains modes de réalisation d'un procédé d'extraction, la quantité d'écorce d'osier ajoutée à l'étape (b) peut être d'environ 10 g à environ 150 g pour 1 litre d'eau.

Selon certains modes de réalisation particuliers, la quantité d'écorce d'osier ajoutée à l'étape (b) peut être d'environ 10, 15, 20, 25, 30, 35, 40, 45, 50, 55, 60, 65, 70, 75, 80, 85, 90, 95, 100, 105, 110, 115, 120, 125, 130, 135, 140, 145 ou 150 g pour 1 litre d'eau.

Selon certains autres modes de réalisation particuliers, la quantité d'écorce d'osier ajoutée à l'étape (b) peut être d'environ 20 g à environ 120 g pour 1 litre d'eau.

Selon certains autres modes de réalisation particuliers, la quantité d'écorce d'osier ajoutée à l'étape (b) peut être d'environ 50 g à environ 100 g pour 1 litre d'eau.

De préférence, la quantité d'écorce d'osier ajoutée à l'étape (b) peut être d'environ 80 g pour 1 litre d'eau.

De préférence, la quantité d'écorce d'osier ajoutée à l'étape (b) peut être d'environ 30 g pour 1 litre d'eau.

Selon certains modes de réalisation particuliers d'un procédé d'extraction, l'étape (c) peut être réalisée à pression atmosphérique.

Généralement, une écorce d'osier, pouvant être utilisée pour obtenir un extrait végétal selon la présente description, peut être une écorce obtenue d'une plante du genre Salix.

Selon certains modes de réalisation, l'écorce d'osier peut être choisie parmi les espèces : Salix acutifolia, Salix aegyptiaca, Salix alaxensis, Salix alba, Salix amplexicaulis, Salix amygdaloides, Salix apennina, Salix apoda, Salix appendiculata, Salix arbuscula, Salix arctica, Salix argyracea, Salix arizonica, Salix armenorossica, Salix atrocinerea, Salix aurita, Salix babylonica, Salix balfouriana, Salix barclayi, Salix bebbiana, Salix bicolor, Salix bikouensis, Salix bonplandiana, Salix brachycarpa, Salix breviserrata, Salix burjatica, Salix burqinensis, Salix caesia, Salix calliantha, Salix calodendron, Salix candida, Salix cantabrica, Salix capensis, Salix capitata, Salix caprea, Salix capusii, Salix carmanica, Salix caroliniana, Salix caspica, Salix cavaleriei, Salix chaenomeloides, Salix cinerea, Salix cordata, Salix daphnoides, Salix discolor, Salix drummondiana, Salix elaeagnos, Salix eriocephala, Salix excelsa, Salix exigua, Salix fargesii, Salix floderusii, Salix fluviatilis, Salix foetida, Salix fragilis, Salix geyeriana, Salix gilgiana, Salix glabra, Salix glauca, Salix glaucosericea, Salix gooddingii, Salix gordejevii, Salix graciliglans, Salix gracilistyla, Salix hastata, Salix hegetschweileri, Salix helvetica, Salix herbacea, Salix hookeriana, Salix humboldtiana, Salix humilis, Salix hylematica, Salix integra, Salix irrorata, Salix japonica, Salix jessoensis, Salix koreensis, Salix koriyanagi, Salix laevigata, Salix laggeri, Salix lanata, Salix lapponum, Salix lasiolepis, Salix lemmonii, Salix lindleyana, Salix linearistipularis, Salix longiflora, Salix longistamina, Salix lucida, Salix luctuosa, Salix magnifica, Salix matsudana, Salix maximowiczii, Salix medwedewii, Salix melanopsis, Salix microstachya, Salix mielichhoferi, Salix miyabeana, Salix moupinensis, Salix muscina, Salix myricoides, Salix myrsinifolia, Salix myrsinites, Salix myrtilloides, Salix neowilsonii, Salix nigra, Salix nivalis, Salix pantosericea, Salix paraplesia, Salix pauciflora, Salix pedicellata, Salix pellita, Salix pentandra, Salix petiolaris, Salix phlebophylla, Salix phylicifolia, Salix planifolia, Salix polaris, Salix psammophila, Salix purpurea, Salix pyrenaica, Salix pyrifolia, Salix rehderiana, Salix repens, Salix reptans, Salix reticulata, Salix retusa, Salix retusoides, Salix rorida, Salix rosmarinifolia, Salix sajanensis, Salix salviifolia, Salix schwerinii, Salix scouleriana, Salix sericea, Salix serissima, Salix serpyllifolia, Salix silesiaca, Salix sitchensis, Salix siuzevii, Salix starkeana, Salix subopposita, Salix subserrata, Salix suchowensis, Salix sungkianica, Salix taxifolia, Salix tenuijulis, Salix tetrasperma, Salix triandra, Salix turanica, Salix udensis, Salix uva-ursi, Salix variegata, Salix viminalis, Salix vulpina, Salix waldsteiniana, Salix wallichiana, Salix wilhelmsiana, Salix wilsonii et Salix yezoalpina Koidz.

De l'écorce obtenue d'une plante du genre Salix (saule) peut aussi être désignée par le terme « Salix spp. Cortex ». Salix spp. cortex ou écorce de Salix étant définie comme une substance de base.

On entend par « substance de base » une substance active qui n'est pas une substance préoccupante pour la santé ; qui n'est pas intrinsèquement capable de provoquer des effets perturbateurs sur le système endocrinien, des effets neurotoxiques ou des effets immunotoxiques ; et qui est utile dans la protection phytosanitaire, soit directement, soit dans un produit constitué par la substance concentrée ou diluée.

Selon certains autres modes de réalisation préférés, un extrait végétal d'écorce d'osier, en particulier une tisane d'écorce d'osier, peut être une composition commerciale.

En particulier, un extrait végétal d'écorce d'osier peut être la substance de base d'infusion d'écorce d'osier commercialisée par la société Biovitis.

Selon certains modes de réalisation préférés, l'extrait végétal mis en œuvre dans la présente description est réalisé à partir d'au moins 0.5 % en poids d'écorce d'osier par rapport au poids total de l'extrait végétal.

Selon certains modes de réalisation, la composition phytosanitaire concentrée telle que décrite ici comporte une teneur d'environ 0.5 % à environ 8 % en poids d'écorce d'osier par rapport au poids total de la composition phytosanitaire.

Selon certains modes de réalisation, la composition phytosanitaire concentrée telle que décrite ici comporte une teneur d'environ 2 % à environ 6 % en poids d'écorce d'osier par rapport au poids total de la composition phytosanitaire.

Selon certains modes de réalisation, la composition phytosanitaire concentrée telle que décrite ici peut comporter en particulier une teneur d'environ 2 %, 3%, 4%, 5% ou 6% en poids d'écorce d'osier par rapport au poids total de la composition phytosanitaire.

Selon certains modes de réalisation préférés, la composition phytosanitaire concentrée telle que décrite ici comporte une teneur d'environ 4 % en poids d'écorce d'osier par rapport au poids total de la composition phytosanitaire.

Illustrativement, pour préparer 1 litre de composition phytosanitaire concentrée selon la présente description il est utilisé environ 50 % d'une préparation d'1 litre de tisane d'écorce d'osier dont la tisane d'écorce d'osier a été obtenue en infusant environ 80 g d'écorce d'osier dans 1 litre d'eau.

### Kit phytosanitaire

Selon un autre de ses aspects, la présente description concerne également un kit phytosanitaire comprenant :
- une première composition consistant en une composition phytosanitaire, en particulier une composition phytosanitaire liquide, sous forme concentrée ou prête à l'emploi, telle que décrite ici, et
- une seconde composition comprenant une source de cuivre ou du métirame de zinc.

Selon certains modes de réalisation d'un kit phytosanitaire tel que décrit ici, la seconde composition comprend une source de cuivre.

Selon certains modes de réalisation, une source de cuivre peut-être un sel de cuivre.

Selon certains modes de réalisation, une source de cuivre peut comprendre du sulfate de cuivre, de l'hydroxyde de cuivre, de l'acétate de cuivre, du carbonate de cuivre, de l'oxychlorure de cuivre ou un mélange de ceux-ci.

Selon certains modes de réalisation d'un kit phytosanitaire tel que décrit ici, une source de cuivre peut être une composition comprenant du sulfate de cuivre.

Selon certains modes de réalisation d'un kit phytosanitaire tel que décrit ici, une seconde composition comprenant une source de cuivre peut être accessible dans le commerce.

Généralement, une composition comprenant du sulfate de cuivre peut être la BOUILLIE BORDELAISE RSR DISPERSS de la société UPL.

Selon certains modes de réalisation d'un kit phytosanitaire tel que décrit ici, la source de cuivre peut être présente dans la seconde composition en une teneur allant de 1 à 50 % en poids de cuivre par rapport au poids total de la seconde composition.

Selon certains modes de réalisation préférés d'un kit phytosanitaire tel que décrit ici, la source de cuivre peut être présente dans la seconde composition en une teneur d'environ 20 % en poids ou moins de cuivre par rapport au poids total de la seconde composition.

La source de cuivre peut être présente dans la seconde composition en une teneur d'environ 1%, 2%, 3%, 4%, 5%, 6%, 7%, 8%, 9%, 10%, 11%, 12%, 13%, 14%, 15%, 16%, 17%, 18%, 19% ou 20 % en poids de cuivre par rapport au poids total de la seconde composition.

Selon certains modes de réalisation d'un kit phytosanitaire tel que décrit ici, la source de cuivre peut être présente dans la seconde composition en une teneur d'environ 5 % ou moins en poids de cuivre par rapport au poids total de la seconde composition.

Selon certains modes de réalisation préférés d'un kit phytosanitaire tel que décrit ici, la source de cuivre peut être présente dans la seconde composition en une teneur d'environ 2 % ou moins en poids de cuivre par rapport au poids total de la seconde composition.

Selon certains modes de réalisation d'un kit phytosanitaire tel que décrit ici, la seconde composition peut comprendre du métirame de zinc.

Selon certains modes de réalisation d'un kit phytosanitaire tel que décrit ici, une composition comprenant du métirame de zinc peut être un produit accessible dans le commerce.

Comme composition comprenant du métirame de zinc accessible dans le commerce il peut notamment être cité le Polyram^{®}.

Selon certains modes de réalisation d'un kit phytosanitaire tel que décrit ici, le métirame de zinc peut être présent dans la seconde composition en une teneur allant d'environ 1 à 50 % en poids de métirame de zinc par rapport au poids total de la seconde composition concentrée.

Selon certaines modes de réalisation préférés d'un kit phytosanitaire tel que décrit ici, le métirame de zinc peut être présent dans la seconde composition en une teneur d'environ 20 % en poids de métirame de zinc par rapport au poids total de la seconde composition concentrée.

Le métirame de zinc peut être présent dans la seconde composition en une teneur d'environ 1%, 2%, 3%, 4%, 5%, 6%, 7%, 8%, 9%, 10%, 11%, 12%, 13%, 14%, 15%, 16%, 17%, 18%, 19% ou 20 % en poids de métirame de zinc par rapport au poids total de la seconde composition.

Selon certains modes de réalisation d'un kit phytosanitaire tel que décrit ici, la source de cuivre peut être présente dans la seconde composition en une teneur d'environ 5 % ou moins en poids de cuivre par rapport au poids total de la seconde composition.

Selon certains modes de réalisation préférés d'un kit phytosanitaire tel que décrit ici, la source de cuivre peut être présente dans la seconde composition en une teneur d'environ 2 % ou moins en poids de cuivre par rapport au poids total de la seconde composition.

### Utilisation d'une composition ou d'un kit phytosanitaire selon la présente description

Selon un autre de ses aspects, la présente description concerne l'utilisation d'une composition phytosanitaire ou d'un kit phytosanitaire selon la présente description, pour la prévention et/ou le traitement d'au moins une maladie cryptogamique d'une plante.

La présente description concerne également l'utilisation d'une composition phytosanitaire ou d'un kit phytosanitaire selon la présente description, pour lutter contre au moins une maladie cryptogamique d'une plante.

La présente description concerne également un procédé de prévention et/ou de traitement d'au moins une maladie cryptogamique d'une plante, comprenant au moins une étape consistant à appliquer, à des fins préventives et/ou stoppantes, au moins une composition phytosanitaire selon la présente description ou un kit phytosanitaire tel que décrit ici à ladite plante.

La présente description concerne également un procédé de lutte contre au moins une maladie cryptogamique d'une plante, comprenant au moins une étape consistant à appliquer, à des fins préventives et/ou stoppantes, au moins une composition phytosanitaire ou un kit phytosanitaire tels que décrits ici à ladite plante.

Selon certains modes de réalisation, une maladie cryptogamique peut-être choisie parmi le mildiou, l'oïdium, l'excoriose, le black-rot, le feu bactérien, la rouille jaune, la fusariose, la tavelure, l'anthracnose, la cloque du pêcher, une maladie causée par des bactéries du genre Xanthomonas, une maladie causée par des bactéries de l'espèce Pseudomonas syringae.

Selon certains modes de réalisation particulier, la maladie du mildiou et la maladie de l'oïdium peuvent être provoquées par plusieurs genres de parasites.

De préférence, la maladie du mildiou peut être provoquée par des champignons du genre Plasmopara, Phytophthora, Peronospora, Pseudoperonospora ou Sclerophthora.

A titre d'exemple, la maladie du mildiou englobe le mildiou de la vigne, le mildiou de la tomate, le mildiou de la pomme de terre, le mildiou de la laitue ou le mildiou des courges.

De préférence, la maladie de l'oïdium peut être provoquée par des champignons du genre Erysiphe, Podosphaera, Sphaerotheca, Golovinomyces, Leveillula ou Uncinula.

A titre d'exemple, la maladie de l'oïdium englobe l'oïdium de la tomate (Leveillula taurica), l'oïdium de la vigne (Erysiphe necator), l'oïdium de la carotte ou l'oïdium de la pomme de terre (Golovinomyces cichoracearum).

De préférence, la maladie de l'excoriose peut être l'excoriose de la vigne, dont la maladie est provoquée par le champignon Phomopsis viticola.

De préférence, la maladie du black-rot peut être le black-rot de la vigne, dont la maladie est provoquée par le champignon Guignardia bidwellii.

Selon certains modes de réalisation particulier, le feu bactérien est une maladie qui peut être provoquée par des champignons du genre Erwinia.

De préférence, la maladie du feu bactérien peut être provoquée par le champignon Erwinia amylovora.

Selon certains modes de réalisation particulier, la rouille jaune est une maladie provoquée par un champignon du genre Puccinia, de préférence de l'espèce Puccinia striiformis.

De préférence, la maladie de la rouille jaune affecte les cultures de céréale.

A titre d'exemple, la rouille jaune peut être la rouille jaune du blé.

Selon certains modes de réalisation particulier, la fusariose est une maladie qui peut être provoquée par un champignon du genre Fusarium.

De préférence, la fusariose est une maladie qui peut être provoquée par un champignon de l'espèce Fusarium culmorum, Fusarium solani, Fusarium oxysporum, Fusarium coeruleum, Fusarium poae ou Fusarium tricinctum,

A titre d'exemple, la fusariose englobe la fusariose de la pomme de terre, la fusariose de la tomate, la fusariose de la pomme de terre, la fusariose du soja ou la fusariose des céréales tels que la fusariose de la tige du maïs, la fusariose de l'épi du maïs, la fusariose du blé ou la fusariose de l'épi du blé.

Selon certains modes de réalisation particulier, la tavelure est une maladie qui peut être provoquée par un champignon de l'espèce Venturia inaequalis.

De préférence, la maladie de la tavelure peut être la tavelure du pommier.

Selon certains modes de réalisation particulier, la maladie de l'anthracnose peut être provoquée par des champignons du genre Apiognomonia, Colletotrichum, Discula, Gloeosporium, Glomerella, Gnomonia, Pseudopeziza, Didymella, Aschochyta, Microdochium, Elsinoe, Sphaceloma, Neofabraea, Kabatiella, Mycocentrospora, Drepanopeziza, Blumeriella, Discula ou Mycosphaerella.

A titre d'exemple, la maladie de l'anthracnose englobe l'anthracnose de la tomate, l'anthracnose de la pomme, l'anthracnose de la vigne, l'anthracnose des céréales, l'anthracnose de la laitue, l'anthracnose de l'aubergine, l'anthracnose de l'épinard, l'anthracnose du cerisier ou l'anthracnose des agrumes.

Selon certains modes de réalisation particulier, la cloque du pêcher est une maladie qui peut être provoquée par un champignon de l'espèce Taphrina deformans.

Selon certains modes de réalisation préférés, une maladie cryptogamique peut-être choisie parmi le mildiou, l'oïdium et l'excoriose.

Selon certains modes de réalisation, une plante peut être infectée ou susceptible d'être infectée par au moins une maladie cryptogamique.

Selon certains modes de réalisation, une plante peut être infectée ou susceptible d'être infectée par deux, voire trois, maladies cryptogamiques.

A titre d'exemple, le traitement d'une plante contre une maladie cryptogamique à l'aide de la composition phytosanitaire telle que décrite ici s'effectue par au moins une étape d'application avec une quantité efficace et non-phytotoxique de ladite composition phytosanitaire ou d'un kit phytosanitaire comprenant ladite composition phytosanitaire, sur les parties aériennes de la plante ou sur le sol où ladite plante croît.

Selon certains modes de réalisation, par « traitement d'une plante » on entend également le traitement des produits de reproduction de la plante, telles que, par exemple, les semences ou les tubercules.

Selon certains modes de réalisation, une composition phytosanitaire ou un kit phytosanitaire de la présente description peut être appliqué au moyen de différents procédés de traitement tels que, la pulvérisation, l'arrosage ou la brumisation.

Selon certains modes de réalisation préférés, la composition phytosanitaire ou le kit phytosanitaire selon la présente description peut être pulvérisée.

De préférence, la composition phytosanitaire ou le kit phytosanitaire selon la présente description peut être pulvérisée sur les parties aériennes d'une plante.

Selon certains modes de réalisation particulier, les parties aériennes d'une plante sont constituées des tiges, des bourgeons, des feuilles, des fleurs et des fruits de la plante.

Selon certains modes de réalisation, la composition phytosanitaire concentrée, appliquée seule ou au sein d'un kit phytosanitaire, peut être appliquée à une dose d'environ 2 litres à environ 6 litres par hectare de plantes à traiter.

Selon certains modes de réalisation, la composition phytosanitaire concentrée, appliquée seule ou au sein d'un kit phytosanitaire, peut être appliquée à une dose d'environ 2, 2.5, 2.75, 3, 3.5, 4, 4.5, 5, 5.5, ou 6 litres par hectare de plantes à traiter.

Selon certains modes de réalisation, la composition phytosanitaire concentrée, appliquée seule ou au sein d'un kit phytosanitaire, peut être appliquée à une dose d'environ 6 litres ou moins, en particulier d'environ 5 litres ou moins, par hectare de plantes à traiter.

Selon certains modes de réalisation préférés, la composition phytosanitaire concentrée, appliquée seule ou au sein d'un kit phytosanitaire, peut être appliquée à une dose d'environ 2.75 litres à environ 5.5 litres par hectare de plantes à traiter.

Selon certains modes de réalisation préférés, la composition phytosanitaire concentrée, appliquée seule ou au sein d'un kit phytosanitaire, peut être appliquée à une dose d'environ 3.3 litres à environ 5 litres par hectare de plantes à traiter.

Selon certains modes de réalisation préférés, la composition phytosanitaire concentrée, appliquée seule ou au sein d'un kit phytosanitaire, peut être appliquée à une dose d'environ 5 litres par hectare de plantes à traiter.

Généralement, la quantité de composition phytosanitaire concentrée par hectare est mise en suspension dans de l'eau, généralement déminéralisée, afin d'obtenir une composition prête à l'emploi, puis pulvérisée sur les cultures de la plante à traiter.

Afin d'obtenir une composition phytosanitaire selon la présente description qui soit prête à l'emploi, la composition phytosanitaire concentrée est diluée dans une quantité d'eau à des concentrations allant d'environ 5 % à 10 % en poids.

Selon certains modes de réalisation préférés, la composition phytosanitaire concentrée est diluée dans une quantité d'eau à une concentration d'environ 5 % en poids.

Selon certains modes de réalisation, l'utilisation ou le procédé selon la présente description peut comprendre une seule application ou plusieurs applications étalées dans le temps.

De préférence, la composition phytosanitaire ou le kit phytosanitaire peut être appliqué au moins 1 fois par semaine ou au moins 1 fois toutes les deux semaines et jusqu'à 4 fois par semaine ou jusqu'à 8 fois toutes les deux semaines.

Selon certains modes de réalisation, la composition phytosanitaire peut être appliquée durant toute la période de culture de la plante, notamment au moment de l'ensemencement de la graine jusqu'à la récolte.

Selon certains modes de réalisation, la composition phytosanitaire peut être appliquée 1 fois ou 2 fois ou 3 fois ou 4 fois après une période de 1 mois ou 2 mois ou 3 mois après l'ensemencement de la graine. Si la composition phytosanitaire est appliquée au moins 2 fois, un intervalle de temps raisonnable est respecté entre les deux applications, comme par exemple un intervalle de 2 jours ou 3 jours ou 4 jours.

Selon certains modes de réalisation, la composition phytosanitaire peut être appliquée durant une période de 1 semaine à 6 mois au maximum.

Les exemples suivants sont donnés à titre indicatif et non limitatif de la présente description.

### Exemples

Dans les exemples ci-après, il est montré l'efficacité de traitement contre la maladie du mildiou et de l'oïdium d'une composition phytosanitaire de la présente description et de la composition phytosanitaire en combinaison avec de faibles quantités de sulfate de cuivre ou de métirame de zinc (en kit).

Il est également démontré tous les autres avantages que présentent l'utilisation de la composition phytosanitaire de la présente description.

### Abréviations :

BB : Bouillie Bordelaise
PK : Phosphonate de potassium
MZ : métirame de zinc
PK + osier : Composition phytosanitaire liquide de la présente description

### Exemple 1 : Formulation et préparation de la composition phytosanitaire (PK + osier)

Afin de préparer un litre de composition phytosanitaire, 500 ml de tisane d'écorce d'osier en substance de base commercialisée par Biovitis (Tisane d'osier : Infusion d'écorce d'osier concentré à 80 g/L (Salix spp cortex)) sont mélangées dans une cuve avec 405 ml (soit 566,7 g) de phosphonate monopotassique (PK 30/20 Solution de la société ALTICHEM -, pH = 4,5 ; da = 1,4g/cm3). Le mélange se fait à température ambiante. Le pH est vérifié à l'aide d'un pH-mètre portable (préalablement étalonné) pour vérifier que le pH soit de 5. Une fois le pH vérifié, le mélange est complété avec de l'eau déminéralisée jusqu'à l'obtention d'un litre de composition de densité 1,18 g/cm3 à 20°C, soit un poids exact de composition phytosanitaire de 1180 g. La composition finale est placée dans un bidon qui est hermétiquement fermé.

Afin d'être utilisée comme pesticide, la composition finale phytosanitaire est généralement diluée à environ 5% avec de l'eau minérale dans une cuve de pulvérisateur. Généralement, la pulvérisation s'effectue au champ à un volume variant entre 100 litres et 300 litres par hectares (ha). La composition phytosanitaire liquide sous sa forme concentrée est utilisée à une dose d'environ 3 L / ha à environ 5 L / ha.

### Exemple 2 : Les effets de la composition phytosanitaire de la présente description sur les maladies cryptogamique (Mildiou et oïdium) et les autres paramètres de la vigne

### 2.1. Matériels et Méthodes

Protocole expérimental pour les essais comparatifs entre la composition phytosanitaire (PK + osier), le phosphonate de potassium (PK) et le phosphonate de potassium associé à la bouillie bordelaise (PK+BB)

Il a été testé l'efficacité de différentes compositions phytosanitaires contre la maladie de l'oïdium de la vigne, à savoir :
- la composition phytosanitaire (PK + osier) telle que préparée à l'exemple 1,
- une composition comprenant du phosphonate de potassium (PK) (10,6% de Phosphite (P) et 7,68% de potassium (K)), et
- une composition comprenant du phosphonate de potassium associée à de la Bouille bordelaise comprenant 20 % en poids de sulfate de cuivre sous forme de poudre ou de micro-granulés (PK + BB).

Les traitements utilisés pour les essais sont résumés dans le Tableau 1 :

**Tableau 1 : Traitements utilisés pour les essais sur vigne contre l'oïdium**

| **Traitement** | **Doses (L/ha)** | **Positionnement** |
|---|---|---|
| Témoin Non Traité (TNT) | | |
| (PK + osier) | 2L/ha | 14 jours |
| PK | 2L/ha | 14 jours |
| PK + BB | 2 L/ha + 1,5 kg/ha | 14 jours |

Les essais ont été réalisés sur des parcelles plantées avec du cépage de Merlot.

Chaque parcelle comprend 4 blocs de 5 souches de vignes, soit chaque parcelle comprenant 20 souches.

La pulvérisation des traitements sur les parcelles a été effectuée à l'aide d'un pulvérisateur pneumatique à dos (Still SR320).

A la suite des 14 jours de traitements, il a été évalué pour chaque parcelle l'intensité d'attaque de l'oïdium sur les feuilles de vigne. Les résultats sont présentés comme la moyenne des blocs de chaque parcelle traitée.

Protocole expérimental pour les essais comparatifs entre la composition phytosanitaire (PK + osier) et le phosphonate de potassium (PK)

Il a été testé l'efficacité de différentes compositions phytosanitaires sur le nombre de baies par grappe de raisin, à savoir :
- la composition phytosanitaire liquide (PK + osier) telle que préparée selon le protocole de l'exemple 1, et
- une composition comprenant du phosphonate de potassium (Trafos^{®} (Tradecorps)).

Les traitements utilisés pour les essais sont résumés dans le Tableau 2 :

**Tableau 2 : Traitements utilisés pour les essais sur vigne**

| **Traitement** | **Doses (L/ha)** | **Positionnement** |
|---|---|---|
| Témoin Non Traité (TNT) | | 14 jours |
| (PK + osier) | 5 L/ha | 14 jours pour 6 à 8 applications |
| Trafos (PK) | 4 L/ha | 14 jours pour 6 à 8 applications |

Les essais ont été réalisés sur des parcelles plantées avec du cépage de Merlot.

Chaque parcelle comprend 4 blocs de 5 souches de vignes, soit chaque parcelle comprenant 20 souches.

La pulvérisation des traitements sur les parcelles a été effectuée à l'aide d'un pulvérisateur pneumatique à dos (Stihl SR 340).

A la suite des 14 jours de traitements, il a été évalué pour chaque parcelle le nombre de baies par grappes. Les résultats sont présentés comme la moyenne des blocs de chaque parcelle traitée.

Protocole expérimental pour les comparaisons avec le métirame de zinc, le fosétyl-aluminium, et le sulfate de cuivre

Il a été testé et comparé l'efficacité de différentes compositions phytosanitaires sur les maladies cryptogamiques de la vigne et la physiologie de la vigne, à savoir :
- la composition phytosanitaire liquide (PK + osier) telle que préparée selon le protocole de l'exemple 1,
- une composition comprenant du métirame de zinc (MZ) (Lutiram^{®} (BASF) 80 % de MZ),
- une composition comprenant du fosétyl-aluminium (Fos-Al) et du métirame de zinc (Sillage^{®} (BASF) composé à 47,1 % de Fos-Al et 28,9 % de MZ, et
- une composition comprenant du sulfate de cuivre (bouillie bordelaise (BB) comprenant 20 % de sulfate de cuivre).

Les traitements utilisés pour les essais sont résumés dans le Tableau 3 suivant :

**Tableau 3 : Traitements utilisés pour les essais**

| **Traitement** | **Doses (Kg ou L/ha)** | **Positionnement** |
|---|---|---|
| Témoin Non Traité | | 12-14 jours |
| Lutiram^{®} ½ dose | 1,75 kg/ha | 12-14 jours pour 6 à 8 applications |
| Lutiram^{®} ½ dose + (PK + osier) | 1,75 kg/ha + 3,3 L/ha | 12-14 jours pour 6 à 8 applications |
| Sillage^{®} | 4 kg/ha | 12-14 jours pour 6 à 8 applications |
| Bouillie Bordelaise (BB) | 1,5 kg/ha | 12-14 jours pour 6 à 8 applications |
| (PK + osier) | 5 L/ha | 14 jours pour 6 à 8 applications |
| BB + (PK + osier) | 1,5 kg/ha + 5 L/ha | 12-14 jours pour 6 à 8 applications |

Les essais ont été réalisés sur des parcelles plantées en cépages Bordelais (Merlot, Petit Verdot, Cabernet Franc et Sémillon).

Chaque parcelle comprend 4 blocs de 5 souches de vignes, soit chaque parcelle comprenant 20 souches.

La pulvérisation des traitements sur les parcelles a été effectuée à l'aide d'un pulvérisateur pneumatique à dos (Stihl SR 340).

A la suite des 12 à 14 jours de traitements, il a été évalué pour chaque parcelle :
- La fréquence d'attaque de maladies cryptogamiques telles que le mildiou et l'oïdium,
- Le taux de résidus de phosphite à la surface des grappes de raisins, et
- La qualité de la vendange.

### Tests statistiques

Le test de Tuckey est utilisé pour permettre de vérifier la validité du modèle en démontrant s'il y a une interaction entre les traitements et les blocs (seuil de risque de 5%).

Le test de Newman Keuls est utilisé pour permettre de constituer des groupes homogènes de traitements. Ainsi les traitements appartenant à un groupe donné sont considérés comme non différents pour un seuil de risque de 5%.

Le test de Dunnett est utilisé pour chercher à montrer une différence entre chaque traitement et le témoin.

### 2.2. Résultats

### 2.2.1. Efficacité de la composition phytosanitaire sur la maladie de l'oïdium comparé au phosphonate de potassium et au phosphonate de potassium + sulfate de cuivre

La maladie de l'oïdium de la plante se manifeste par l'apparition d'un feutrage, blanc à blanc-grisâtre, d'aspect farineux à la surface des organes aériens de la plante (feuilles, tiges et parfois fleurs ou fruits).

L'intensité d'attaque de l'oïdium sur feuilles et grappes de vignes pour chaque parcelle de Merlot traités sont présentés dans le Tableau 4.

**Tableau 4 : Intensité d'attaque de l'oïdium sur vignes traitées par traitement phytosanitaire**

| **Traitement** | **Intensité de l'oïdium sur les feuilles et grappes de vignes (moyenne des blocs)** |
|---|---|
| Témoin non traité | **30%** |
| PK + BB | **12,5 %** |
| PK | **27,5 %** |
| (PK + osier) | **15 %** |

Il est observé que le traitement avec la composition phytosanitaire (PK + osier) est plus efficace contre l'oïdium que le traitement avec la composition comprenant du phosphonate de potassium (PK). Le traitement avec la composition phytosanitaire (PK + osier) est au moins aussi efficace que le traitement (PK + BB).

Ainsi, la composition phytosanitaire (PK + osier) est efficace contre l'oïdium de la vigne sans ajout de produits fongicides additionnels, tel que le sulfate de cuivre.

### 2.2.2 : La composition phytosanitaire de la présente description améliore la physiologie de la vigne

- Des essais ont été réalisés afin d'étudier l'influence de la composition phytosanitaire (PK + osier) sur certains paramètres physiologiques de la vigne.

### Nombre de baies par grappe de raisin

**Tableau 5 : Nombre de baies par grappe des vignes de chaque parcelles traitées ou non traitées**

| | **Nombre de baies par grappe de raisin** | | |
|---|---|---|---|
| Bloc | **PK + osier** | **PK** | **TNT** |
| **1** | 122 | 112 | 96 |
| **2** | 120 | 121 | 102 |
| **3** | 128 | 125 | 107 |
| **4** | 138 | 126 | 99 |
| **Moyenne du nombre de baies par grappe** | **127** | **121** | **101** |

Il est observé sur les résultats du Tableau 5 que le nombre moyen de baies par grappe de raisin des vignes traitées avec la composition phytosanitaire (PK + osier) est d'environ 127 baies par grappe de raisin, contre 121 et 101 baies par grappes de raisin pour les parcelles traitées avec un produit à base de phosphonate de potassium ou des parcelles non traitées, respectivement.

En conséquence, le nombre de baies par grappe, après traitement avec la composition phytosanitaire (PK + osier), permet une augmentation significative du nombre de baies par grappe de raisin.

### Résidus de phosphite

**Tableau 6 : Résidus de phosphite sur les grappes de raisin après traitement de la vigne avec la composition phytosanitaire (PK + osier) ou la composition Sillage^{®}**

| **Traitement** | **Teneur en résidu de phosphite sur raisin Petit verdot (mg/kg)** | **Teneur en résidu de phosphite sur raisin Sémillon (mg/kg)** | **Teneur en résidu de phosphite sur raisin Sauvignon (mg/kg)** |
|---|---|---|---|
| (PK + osier) | < 0.04 | 0.07 | <0.04 |
| Sillage ^{®} | 0.16 | <0.04 | <0.04 |

Le dosage en résidus de phosphite sur les raisins a été réalisé par le laboratoire LCA (Tableau 6). Le seuil limite de détection des résidus de phosphite est de 0.04 mg/kg. Ainsi, toute teneur inférieure à 0.04 mg/kg est considérée comme nulle. Il est également à noter qu'une teneur en résidus de phosphite inférieur ou égale à 3mg/kg ne permet pas de déterminer si les phosphites dosés sont des phosphites endogènes à la plante ou exogènes à la plante (Grinbaum et al. BIO Web of Conferences 12, 04010 (2019)).

Les résultats obtenus démontrent qu'aucune trace de résidus de phosphite n'est retrouvée sur les raisins des vignes Petit verdot et Sauvignon, les teneurs moyennes étant inférieures à 0.04 mg/kg. Seulement 0.07 mg/kg de résidus de phosphite sont retrouvés en moyenne sur les grappes de raisin des vignes Sémillon (Tableau 6, ci-dessous).

Par ailleurs, la teneur en résidus de phosphite est règlementée et autorisée à condition que ces résidus ne dépassent pas la Limite Maximale de Résidus (LMR). A titre illustratif, la LMR de phosphite en Allemagne est de 5 mg/kg, de 70 mg/kg au Japon et de 0.3 mg/kg en France.

En conséquence, la composition (PK + osier) ne dépasse pas la LMR autorisée dans plusieurs pays.

Cette faible quantité ou absence en résidus de phosphite sur les raisins peut s'expliquer tout d'abord par la faible quantité de composition phytosanitaire (PK + osier) utilisée pour le traitement des vignes.

Également, il est possible que cette absence de résidus soit due à la métabolisation de la composition phytosanitaire par la plante.

### Qualité des vins issus des raisins

Enfin, il a été testé si la composition phytosanitaire (PK + osier) altérait la qualité des vins produits à partir des vignes traitées.

Pour cela, une dégustation a été réalisée par un panel de 7 consommateurs sur des cépages Petit Verdot et Sauvignon Blanc traités avec le Lutiram^{®} ou le Lutiram^{®} associé au à la composition phytosanitaire (PK + osier).

Il ressort de cette dégustation que le vin Sauvignon Blanc, issu des vignes traitées avec la composition (PK + osier), a de meilleures propriétés organoleptiques (moyenne des notes attribuées : 14) que le vin issu des vignes traitées avec le Lutiram^{®} (moyenne des notes attribuées : 12,33).

Concernant le vin rouge, les deux vins obtiennent une moyenne similaire.

Ainsi, la composition phytosanitaire (PK + osier) n'altère pas la qualité des vins après le traitement des vignes dont le vin est issu.

### 2.2.3. L'efficacité d'un kit phytosanitaire comprenant la composition phytosanitaire (PK + osier) sur la maladie du mildiou (3.3 L/ha)

La maladie du mildiou de la vigne se manifeste par de petites taches polyédriques de couleur jaune à brun-rouge nombreuses et limitées par les nervures sur les feuilles de vignes. La maladie du mildiou peut être plus au moins importante en fonction de la pression parasitaire, elle peut être faible, moyenne ou forte.

Les tests statistiques montrent que les données ci-après présentées sont significatives concernant les traitements sur chaque parcelle et ne dépend pas des blocs.

### a. Pression faible du mildiou

Le Tableau 7 présente le nombre de tâches comptabilisées sur les feuilles de vignes sur chaque parcelle (moyenne des blocs) en fonction du traitement appliqué.

**Tableau 7 : Nombre de tâches de mildiou sur feuilles de chaque parcelle**

| **Traitement** | **Nombre de tâches de mildiou sur feuilles de chaque parcelle (moyenne des blocs)** |
|---|---|
| | Sauvignon Blanc |
| Lutiram^{®} | 8 |
| Sillage^{®} | 6 |
| (PK + osier) + Lutiram^{®} | 3,6 |

Il est observé que les feuilles de vignes traitées avec la composition phytosanitaire (PK + osier) associée au Lutiram^{®} présentent moins de tâches que les feuilles de vignes traitées avec du métirame de zinc (Lutiram^{®} et Sillage^{®}).

Ainsi, l'utilisation à dose réduite des compositions connues telles que le Sillage^{®} ou le Lutiram^{®} ne permet pas un traitement efficace de la vigne contre le mildiou.

En revanche, la composition phytosanitaire (PK + osier) associée au Lutiram^{®} à dose réduite est plus efficace contre le mildiou de la vigne que le Sillage^{®} ou le Lutiram^{®} à dose réduite.

### b. Moyenne et forte pression du mildiou

Le tableau 8 présente la fréquence d'attaque du mildiou sur les feuilles de vignes sur chaque parcelle (moyenne des blocs) en fonction du traitement appliqué.

**Tableau 8 : Fréquence d'attaque du mildiou de la vigne (%)**

| **Traitement** | **Fréquence d'attaque du mildiou de la vigne** | | |
|---|---|---|---|
| | Pression moyenne du mildiou | | Pression forte du mildiou |
| | Merlot | Petit Verdot | Cabernet Sauvignon |
| Lutiram^{®} | 25,5 % | 32,7 % | 4,6 % |
| Sillage^{®} | 30,5 % | 14,7 % | 1,7 % |
| (PK + osier) + Lutiram^{®} | 19 % | 21,3 % | 1,47 % |

Pour le Merlot, il est observé que la fréquence d'attaque du mildiou est en moyenne de 19 % pour les vignes présentent sur les blocs traités avec la composition phytosanitaire (PK + osier) associée à une faible dose de Lutiram^{®}, contre 25,5 % et 30,5 % pour les vignes présentent sur les blocs traités avec le Lutiram^{®} et le Sillage^{®}, respectivement.

Pour le Petit Verdot, il est observé que la fréquence d'attaque du mildiou est en moyenne de 21,3 % pour les vignes présentent sur les blocs traités avec la composition phytosanitaire (PK + osier) associée à une faible dose de Lutiram^{®}, contre 32,7 % pour les vignes présentent sur blocs traités avec le Lutiram^{®}.

Pour le Cabernet Sauvignon, il est observé que la fréquence d'attaque du mildiou est en moyenne de 1,47 % pour les vignes présentent sur les blocs traités avec la composition phytosanitaire (PK + osier) associée à une faible dose de Lutiram^{®}, contre 4,6 % et 1,7 % pour les blocs traités avec le Lutiram^{®} et le Sillage^{®}, respectivement.

En conclusion :
- Un kit comprenant la composition phytosanitaire (PK + osier) est efficace lorsque le mildiou exerce une faible pression.
- Lorsque le mildiou exerce une moyenne pression, la composition phytosanitaire (PK + osier) associée au Lutiram^{®} se différencie du Lutiram^{®} en montrant une efficacité en moyenne de 30 % en termes de fréquence et d'intensité.
- Enfin, lorsque le mildiou exerce une forte pression, la composition phytosanitaire (PK + osier) associée au Lutiram^{®} se distingue du Lutiram^{®} en termes d'intensité en montrant une efficacité avoisinant les 60%.

En ce qui concerne plus précisément la comparaison avec le Sillage^{®}, la composition phytosanitaire (PK + osier) associée au Lutiram^{®} obtient des efficacités :
- équivalentes dans 50 % des essais,
- inférieures dans 22 % des essais,
- supérieures dans 28 % des essais.

La composition phytosanitaire (PK + osier) appliquée à 3,3 litres/ha et associée à une demi-dose de métirame de zinc possède donc une efficacité au moins équivalente à celle du Sillage^{®} (fosétyl-aluminium + métirame de zinc).

### 2.2.4. Efficacité d'un kit phytosanitaire comprenant la composition phytosanitaire sur la maladie du mildiou et de l'oïdium comparé au sulfate de cuivre (Bouillie Bordelaise) (5 litres/ha)

### a. Traitement contre la maladie du mildiou

Le tableau 9 présente le nombre de tâches de mildiou sur feuille de vignes de chaque parcelles (moyenne des blocs) en fonction du traitement appliqué.

**Tableau 9 : Nombre de tâches de mildiou sur feuille**

| **Traitement** | **Nombre de tâches de mildiou (moyenne des blocs de chaque parcelle)** |
|---|---|
| Témoin non traité | 28 |
| BB | 5 |
| BB + (PK + osier) | 0 |

Un dosage à 5L/ha de la composition phytosanitaire permet d'augmenter l'efficacité de traitement sur la maladie du mildiou de la composition en combinaison avec la Bouillie Bordelaise (Tableau 9).

Il est ainsi démontré que la composition phytosanitaire constituée d'une fraction chimique, phosphonate de potassium, et d'une fraction organique, infusion d'écorce d'osier, permet une protection plus efficace de la plante contre le mildiou qu'une dose réduite de Bouillie Bordelaise appliquée seule.

### b. Traitement contre la maladie du l'oïdium

Le tableau 10 présente la fréquence d'attaque de l'oïdium sur les parcelles (moyenne des blocs) de vigne en fonction du traitement appliqué.

**Tableau 10 : Fréquence d'attaque de l'oïdium sur les feuilles de vignes**

| **Traitement** | **Fréquence d'attaque de l'oïdium sur les feuilles de vignes (Moyenne des blocs)** |
|---|---|
| Témoin non traité | **40 %** |
| BB | **32.8 %** |
| BB + (PK + osier) | **8.8 %** |

Il a été observé que les vignes ayant reçues le traitement BB associé à la composition phytosanitaire (PK + osier) ont une fréquence d'attaque d'oïdium en moyenne de 8,8 % alors que les vignes ayant reçues le traitement BB ont une fréquence d'oïdium de 32,8 % (Tableau 10).

Les essais démontrent ainsi une action secondaire de la composition phytosanitaire (PK + osier) sur l'oïdium de la vigne.

### 2.3 Effet synergique entre la tisane d'écorce d'osier et le phosphonate de potassium

### Matériel et méthode

Trois compositions phytosanitaires ont été testées pour comparer leurs efficacités contre la maladie du mildiou de la vigne en conditions contrôlées.

Chaque composition a été testée sur des plants de vignes différentes (cépage : Cabernet sauvignon, n=6). Un plant comprend de 4 à 6 feuilles à la date du traitement (plante d'environ 3 mois).

Les plants sont traités deux fois, avec un volume de pulvérisation de 600 L/ha, une première fois 4 jours avant l'inoculation du pathogène et une deuxième fois à 1 jour avant l'inoculation du pathogène.

Lors du traitement, les plants sont placés dans une cabine de pulvérisation équipée d'un banc de pulvérisation portant 5 buses (2 latérales à droite, 2 latérales à gauche et 1 supérieure, buse plate Albuz 110°) et sont traités avec la composition correspondante (Tableau 11). Une fois traités pour la seconde fois, les plants sont contaminés le lendemain avec la souche pathogène responsable du mildiou de la plante. L'inoculation a été réalisée avec une pression modérée (25 000 spores / ml).

**Tableau 11 : Compositions et doses appliquées**

| Produit | Composition | Dose L/ha |
|---|---|---|
| Infusion d'écorce d'osier (osier) | Infusion dans de l'eau d'écorce d'osier équivalent à 60 g/L (Salix spp cortex) | 2.75 |
| Infusion d'écorce d'osier (osier) | Infusion dans de l'eau d'écorce d'osier équivalent à 60 g/L (Salix spp cortex) | 1.40 |
| Phosphonate de potassium (PK) | Phosphonate de potassium 726 g/l (soit 470 g/L d'acide phosphoreux) | 2.15 |
| Phosphonate de potassium (PK) | Phosphonate de potassium 726 g/l (soit 470 g/L d'acide phosphoreux) | 1.07 |
| PK + osier | Phosphonate de potassium 282 g/l (soit 198.5 d'acide phosphoreux) + Infusion dans de l'eau d'écorce d'osier équivalent à 30 g/L (Salix spp cortex) | 5.50 |
| PK + osier | Phosphonate de potassium 282 g/l (soit 198.5 d'acide phosphoreux) + Infusion dans de l'eau d'écorce d'osier équivalent à 30 g/L (Salix spp cortex) | 2.75 |

A la fin d'une période de 8 jours après la contamination, chaque feuille sera observée individuellement afin d'évaluer l'intensité de contamination.

Les résultats sont indiqués sur une échelle de 0 contamination à 100 % de contamination (Figure 1).

Il est ainsi observé un effet synergique entre le phosphonate de potassium et l'infusion d'écorce d'osier sur la protection de la plante. A doses égales, les plantes traitées avec la composition phytosanitaire de la présente divulgation (osier + PK) prévient plus efficacement contre la contamination des plantes par le mildiou (0% de contamination pour la dose 5,5L/ha et 1,7% de contamination pour la dose 2,75L/ha) que le traitement des plantes avec la tisane d'écorce d'osier ou le phosphonate de potassium utilisé de manière isolé.

### Exemple 3 : Conclusions

En conclusion, une composition phytosanitaire comprenant, à titre d'agents actifs, un composé phosphonate de potassium et une tisane d'écorce d'osier (PK + osier) est apte à lutter efficacement et de manière synergique contre les maladies cryptogamiques de la plante, tel que le mildiou ou l'oïdium, sur différents cépages de la vigne (partie 2.3).

Il a été démontré que le traitement avec la composition phytosanitaire (PK + osier) est plus efficace sur l'oïdium de la vigne qu'un traitement avec une composition comprenant du phosphonate de potassium (partie 2.2.1). Par conséquent, une composition phytosanitaire liquide comprenant, à titre d'agents actifs, au moins un composé phosphite fongicide et un extrait végétal hydrophile d'écorce d'osier permet d'assurer une protection efficace sans autre composition fongicide sur la maladie du mildiou et de l'oïdium.

En outre des effets concluants sur les maladies cryptogamiques de la plante, il a également été démontré que la composition phytosanitaire (PK + osier) n'altère pas la physiologie de la vigne, voire améliore certain de ses paramètres, tout en étant plus efficace et moins polluant que les produits phytosanitaires actuellement sur le marché. Par exemple, la composition phytosanitaire (PK + osier) permet une augmentation significative du nombre de baies par grappe de raisin d'une vigne comparé à un traitement avec du phosphonate de potassium. Également, la composition phytosanitaire (PK + osier) laisse peu, voire pas, de résidus phosphites sur les plantes traitées et n'altère pas la qualité des vins obtenus par la fermentation des raisins issus des vignes traitées (partie 2.2.2 des résultats).

Ainsi, l'utilisation d'une composition phytosanitaire liquide comprenant, à titre d'agents actifs, au moins un composé phosphite fongicide, et un extrait végétal hydrophile d'écorce d'osier est efficace contre les maladies cryptogamiques de la plante. En particulier, la composition phytosanitaire liquide de la présente description est plus efficace à dose égale qu'une composition comprenant, à titre d'agent actif, du phosphonate de potassium.

Par ailleurs, un kit phytosanitaire comprenant la composition phytosanitaire (PK + osier) en combinaison avec une composition comprenant du métirame de zinc à faible dose est notamment plus efficace sur le mildiou qu'un traitement à faible dose d'une composition comprenant du métirame de zinc appliquée seule (partie 2.2.3). La composition phytosanitaire (PK + osier) en combinaison avec une composition comprenant du sulfate de cuivre est également plus efficace sur le mildiou et l'oïdium qu'un traitement avec une composition comprenant du sulfate de cuivre seule (partie 2.2.4).

Ainsi, un kit phytosanitaire comprenant une première composition comprenant, à titre d'agents actifs, au moins un composé phosphite fongicide et un extrait végétal hydrophile d'écorce d'osier, et une composition secondaire comprenant une source de cuivre ou du métirame de zinc est apte à lutter contre au moins une maladie cryptogamique de la plante de manière significative tout en étant plus efficace et moins polluant que les doses actuellement utilisées pour les produits phytosanitaires présents sur le marché.

### Liste des documents cités

FR2917947
FR2867026
Grinbaum M., Dubernet M., Bouazza V., Debez E., et Lempereur V. Résidus phytosanitaires dans les vins : 'état des lieux, analyses et expertise. BIO Web of Conferences 12, 04010 (2019) https://doi.org/10.1051/bioconf/20191204010

## Revendications

1. Composition phytosanitaire liquide comprenant, à titre d'agents actifs, au moins :
- un composé phosphite fongicide choisi parmi le phosphite de sodium, le phosphite de potassium, le phosphite d'ammonium, le phosphite de triéthylamine, le phosphite de diéthanolamine, et leurs mélanges, et
- un extrait végétal hydrophile d'écorce d'osier.

2. Composition phytosanitaire liquide selon la **revendication 1,** dans laquelle le composé phosphite fongicide est le phosphite de monopotassium.

3. Composition phytosanitaire liquide selon la **revendication 1 ou 2,** dans laquelle le composé phosphite fongicide est présent en une teneur de 10 % à 20 % en poids par rapport au poids total de la composition phytosanitaire.

4. Composition phytosanitaire liquide selon l'une quelconque des **revendications 1 à 3,** dans laquelle l'extrait végétal hydrophile d'écorce d'osier est une tisane d'écorce d'osier.

5. Composition phytosanitaire liquide selon l'une quelconque des **revendications 1 à 4,** dans laquelle la composition phytosanitaire comporte une teneur en écorce d'osier de 0.5 % à 8 % en poids par rapport au poids total de la composition phytosanitaire.

6. Composition phytosanitaire liquide selon l'une quelconque des **revendications 1 à 5,** la composition phytosanitaire ayant un pH inférieur à 6.5.

7. Kit phytosanitaire comprenant une première composition comprenant une composition phytosanitaire liquide selon l'une des revendications précédentes, et une seconde composition comprenant une source de cuivre ou du métirame de zinc.

8. Utilisation d'une composition phytosanitaire liquide selon l'une quelconque des **revendications 1 à 6** ou d'un kit phytosanitaire selon la **revendication 7,** pour la prévention et/ou le traitement d'au moins une maladie cryptogamique d'une plante.

9. Utilisation d'une composition phytosanitaire liquide ou d'un kit phytosanitaire selon la **revendication 8,** la maladie cryptogamique étant choisie parmi le mildiou, l'oïdium, l'excoriose, le black-rot, le feu bactérien, la rouille jaune, la fusariose, la tavelure, l'anthracnose, la cloque du pêcher, une maladie causée par des bactéries du genre *Xanthomonas* ou une maladie causée par des bactéries de l'espèce *Pseudomonas syringae.*

10. Procédé de préparation d'une composition phytosanitaire selon l'une quelconque des **revendications 1 à 6,** comprenant au moins une étape de mélange d'au moins une composition comprenant un composé phosphite fongicide choisi parmi le phosphite de sodium, le phosphite de potassium, le phosphite d'ammonium, le phosphite de triéthylamine, le phosphite de diéthanolamine, et leurs mélanges, et d'au moins un extrait végétal hydrophile d'écorce d'osier.

11. Procédé de préparation d'une composition phytosanitaire selon la **revendication 10,** dans laquelle l'extrait végétal hydrophile d'écorce d'osier est une tisane d'écorce d'osier.

## Patentansprüche

1. Flüssige Pflanzenschutzzusammensetzung, die als Wirkstoffe zumindest die folgenden umfasst:
- eine fungizide Phosphitverbindung, die aus Natriumphosphit, Kaliumphosphit, Ammoniumphosphit, Triethylaminphosphit, Diethanolaminphosphit und deren Mischungen ausgewählt ist, und
- einen hydrophilen Pflanzenextrakt aus Flechtweidenrinde.

2. Flüssige Pflanzenschutzzusammensetzung nach Anspruch 1, wobei es sich bei der fungiziden Phosphitverbindung um Monokaliumphosphit handelt.

3. Flüssige Pflanzenschutzzusammensetzung nach Anspruch 1 oder 2, wobei die fungizide Phosphitverbindung zu einem Gehalt von 10 % bis 20 % nach Gewicht vorliegt, bezogen auf das Gesamtgewicht der Pflanzenschutzzusammensetzung.

4. Flüssige Pflanzenschutzzusammensetzung nach einem beliebigen der Ansprüche 1 bis 3, wobei es sich bei dem hydrophilen Pflanzenextrakt aus Flechtweidenrinde um einen wässrigen Flechtweidenrindenaufguss handelt.

5. Flüssige Pflanzenschutzzusammensetzung nach einem beliebigen der Ansprüche 1 bis 4, wobei die Pflanzenschutzzusammensetzung einen Gehalt an Flechtweidenrinde von 0,5 bis 8 % nach Gewicht aufweist, bezogen auf das Gesamtgewicht der Pflanzenschutzzusammensetzung.

6. Flüssige Pflanzenschutzzusammensetzung nach einem beliebigen der Ansprüche 1 bis 5, wobei die Pflanzenschutzzusammensetzung einen pH-Wert von weniger als 6,5 hat.

7. Pflanzenschutzkit, das eine erste Zusammensetzung, welche eine flüssige Pflanzenschutzzusammensetzung nach einem beliebigen der vorhergehenden Ansprüche umfasst, und eine zweite Zusammensetzung umfasst, welche eine Kupferquelle oder Zinkmetiram umfasst.

8. Verwendung einer flüssigen Pflanzenschutzzusammensetzung nach einem beliebigen der Ansprüche 1 bis 6 oder eines Pflanzenschutzkits nach Anspruch 7, um mindestens eine Pilzerkrankung einer Pflanze zu verhüten und/oder zu behandeln.

9. Verwendung einer flüssigen Pflanzenschutzzusammensetzung oder eines Pflanzenschutzkits nach Anspruch 8, wobei die Pilzerkrankung aus falschem Mehltau, echtem Mehltau, Eutypiose, Schwarzfäule, Feuerbrand, Gelbrost, Fusariose, Schorf, Anthraknose, der Kräuselkrankheit, einer Krankheit, die durch Bakterien der Gattung Xanthomonas verursacht wird, oder einer Krankheit ausgewählt ist, die durch Bakterien der Art Pseudomonas syringae verursacht wird.

10. Verfahren zur Herstellung einer Pflanzenschutzzusammensetzung nach einem beliebigen der Ansprüche 1 bis 6, wobei es zumindest einen Schritt des Mischens mindestens einer Zusammensetzung, die eine fungizide Phosphitverbindung umfasst, welche aus Natriumphosphit, Kaliumphosphit, Ammoniumphosphit, Triethylaminphosphit, Diethanolaminphosphit und deren Mischungen ausgewählt ist, und mindestens eines hydrophilen Pflanzenextrakts aus Flechtweidenrinde umfasst.

11. Verfahren zur Herstellung einer Pflanzenschutzzusammensetzung nach Anspruch 10, wobei es sich bei dem hydrophilen Pflanzenextrakt aus Flechtweidenrinde um einen wässrigen Flechtweidenrindenaufguss handelt.

## Claims

1. Liquid phytosanitary composition comprising, as active agents, at least:
- a fungicidal phosphite compound selected from sodium phosphite, potassium phosphite, ammonium phosphite, triethylamine phosphite, diethanolamine phosphite, and mixtures thereof, and
- a hydrophilic plant extract of willow bark.

2. Liquid phytosanitary composition according to Claim 1, wherein the fungicidal phosphite compound is monopotassium phosphite.

3. Liquid phytosanitary composition according to Claim 1 or 2, wherein the fungicidal phosphite compound is present in a content of from 10% to 20% by weight relative to the total weight of the phytosanitary composition.

4. Liquid phytosanitary composition according to any one of Claims 1 to 3, wherein the hydrophilic plant extract of willow bark is a herbal infusion of willow bark.

5. Liquid phytosanitary composition according to any one of Claims 1 to 4, wherein the phytosanitary composition comprises a content of willow bark of from 0.5% to 8% by weight relative to the total weight of the phytosanitary composition.

6. Liquid phytosanitary composition according to any one of Claims 1 to 5, the phytosanitary composition having a pH of less than 6.5.

7. Phytosanitary kit comprising a first composition comprising a liquid phytosanitary composition according to one of the preceding claims, and a second composition comprising a source of copper or zinc metiram.

8. Use of a liquid phytosanitary composition according to any one of Claims 1 to 6 or of a phytosanitary kit according to Claim 7, for the prevention and/or treatment of at least one cryptogamic disease of a plant.

9. Use of a liquid phytosanitary composition or of a phytosanitary kit according to Claim 8, the cryptogamic disease being selected from downy mildew, powdery mildew, excoriosis, black rot, fire blight, yellow rust, Fusarium wilt, scab, anthracnose, peach leaf curl, a disease caused by bacteria of the genus *Xanthomonas* or a disease caused by bacteria of the species *Pseudomonas syringae.*

10. Process for preparing a phytosanitary composition according to any one of Claims 1 to 6, comprising at least a step of mixing at least one composition comprising a fungicidal phosphite compound selected from sodium phosphite, potassium phosphite, ammonium phosphite, triethylamine phosphite, diethanolamine phosphite, and mixtures thereof, and at least one hydrophilic plant extract of willow bark.

11. Process for preparing a phytosanitary composition according to Claim 10, wherein the hydrophilic plant extract of willow bark is a herbal infusion of willow bark.
